# EUROPÄISCHE PATENTANMELDUNG

(11) **EP 1 298 027 A2**
(43) Veröffentlichungstag der Anmeldung: **02.04.2003**
(21) Anmeldenummer: 02017340.7
(22) Anmeldetag: 02.08.2002
(51) Int. Cl.: B62D 1/04

(54) **Lenkrad für ein Kraftfahrzeug**

(30) Priorität: 29.09.2001 DE 10148327
(71) Anmelder: Bayerische Motoren Werke Aktiengesellschaft, 80809 München (DE)
(72) Erfinder: Stephan, Anton, 85598 Baldham (DE)

(57) **Zusammenfassung**

Die Erfindung betrifft ein Lenkrad für ein Kraftfahrzeug mit einem solchermaßen in seiner Form veränderbaren Lenkradkranz, dass sich im Verlauf einer Lenkrad-Drehbewegung aufgrund dieser Formveränderung der Abstand zwischen einem kranzfesten Punkt, an welchem sich die Hand des Fahrzeug-Fahrers befindet, und dem ortsfesten Abstützpunkt des Fahrer-Schultergelenkes an der Lehne des Fahrzeugsitzes um einen geringeren Betrag ändert, als dies bei einem formfesten Lenkradkranz während der gleichen Lenkbewegung der Fall ist. Bevorzugt ist Lenkradkranz in relativ zueinander bewegbare Teilabschnitte unterteilt, wobei ein in Lenkrad-Neutralstellung linksliegender und ein in Lenkrad-Neutralstellung rechtsliegender Lenkradkranz-Teilabschnitt jeweils um eine im wesentlichen in der Ebene des Lenkrades verlaufende Schwenkachse zumindest geringfügig zum Fahrer hin oder von diesem weg verschwenkbar ist. Vorgesehen sein kann ein weiterer Lenkradkranz-Teilabschnitt, der im wesentlichen starr mit einem an einer Lenkspindel drehfest befestigten Lenkradmittelteil verbunden ist und an dem die verschwenkbaren Lenkradkranz-Teilabschnitte gelenkig angebunden sind. Die Verschwenkbewegung der verschwenkbaren Lenkradkranz-Teilabschnitte im Verlauf einer Lenkrad-Drehbewegung wird bevorzugt durch eine Kulissenbahn gesteuert.

## Beschreibung

Die Erfindung betrifft ein Lenkrad für ein Fahrzeug, insbesondere ein Kraftfahrzeug, mit einem in seiner Form veränderbaren Lenkradkranz. Lediglich beispielshalber wird zum technischen Umfeld auf die DE 199 19 278 A1 verwiesen.

Eine optimale Sitzposition bezüglich des Fahrzeug-Lenkrads nimmt ein Fahrer eines (Kraft-)Fahrzeugs, insbesondere eines PKW's, ein, wenn die Arme im Ellenbogengelenk stets abgewinkelt sind. Insbesondere soll dies auch bei einem Verdrehen des Lenkrades ohne Umgreifen am Lenkradkranz gelten, d.h. ausgehend von der sog. Lenkrad-Neutralstellung, in der die lenkbaren Fahrzeugräder nicht eingeschlagen sind, bis zu einem Lenkrad-Verdrehwinkel von ca. 180° sollte eine abgewinkelte Armstellung eingehalten werden können.

Bei heute üblichen Lenkrädern kann diese Anforderung praktisch nur dann erfüllt werden, wenn die Drehachse des Lenkrads senkrecht zum Oberkörper des Fahrers mittig im wesentlichen auf die Verbindungslinie zwischen seinen beiden Schulter-Kugelgelenken auftrifft. In der Praxis jedoch verläuft die durch das Lenkrad beschriebene Ebene, die senkrecht zur Lenkrad-Drehachse ist, nicht parallel zum Fahrer-Oberkörper, sondern ist derart gegenüber diesem geneigt, dass die Lenkrad-Drehachse in Fahrtrichtung betrachtet schräg nach unten verläuft. Teilweise ist die Lenkrad-Drehachse, d.h. die sog. Lenkspindel, zusätzlich in einer zur Fahrbahn parallelen Ebene betrachtet geringfügig gegenüber der Fahrzeug-Längsachse geneigt. Schließlich wird ein Lenkrad oftmals desachsiert angebracht, d.h. dass die Lenkspindelachse nicht exakt durch den Mittelpunkt des Lenkrads verläuft, um einen größeren Freiraum zwischen der Lenkrad-Unterseite und dem Fahrzeug-Sitz zu haben.

Eine Folge dieser Lenkrad-Anordnung ist, dass sich bei einem Lenkrad-Einschlag um bspw. 90° (ausgehend von der Lenkrad-Neutralstellung) der Abstand zwischen einem festen Punkt des Lenkradkranzes, an dem - ohne dass ein Umgreifen erfolgt - der Fahrer den Lenkradkranz mit seiner Hand umfasst, und dem zu dieser Hand gehörenden Schultergelenk des Fahrers verändert, und zwar vergrößert. Eine nochmalige Vergrößerung dieses Abstandes tritt beim Weiterdrehen des Lenkrades um bspw. weitere 90° (ohne Umgreifen) auf. Erst bei Lenkwinkeln größer ca. 160° bis 180° wird üblicherweise umgegriffen, d.h. die Angriffsstelle der Hände am Lenkradkranz verändert.

Zumeist ist die soeben beschriebene Abstandsänderung bzw. -vergrößerung so groß, dass die jeweilige (linke bzw. rechte) Schulter des Fahrers nicht mehr an der Lehne des Fahrzeugsitzes abgestützt bleiben kann. Soll das Fahrzeug in einer starken Linkskurve bewegt werden, muss der Fahrer somit seine rechte Schulter von der Lehne weg nach vorne bewegen, und bei einer Rechtskurve dementsprechend seine linke Schulter, was grundsätzlich unerwünscht ist.

Eine Abhilfemaßnahme für diese geschilderte Problematik aufzuzeigen, ist Aufgabe der vorliegenden Erfindung.
Die Lösung dieser Aufgabe ist dadurch gekennzeichnet, dass der Lenkradkranz derart formveränderlich ist, dass sich im Verlauf einer Lenkrad-Drehbewegung aufgrund dieser Formveränderung der Abstand zwischen einem kranzfesten Punkt, an welchem sich die Hand des Fahrzeug-Fahrers befindet, und dem ortsfesten Abstützpunkt des Fahrer-Schultergelenkes an der Lehne des Fahrzeugsitzes um einen geringeren Betrag ändert, als dies bei einem formfesten Lenkradkranz während der gleichen Lenkbewegung der Fall ist. Vorteilhafte Aus- und Weiterbildungen sind Inhalt der Unteransprüche.

Ein erfindungsgemäßes Lenkrad ist in der Lage, die beschriebene Änderung des Abstands zwischen dem sog. Handangriffspunkt am Lenkradkranz - (dieses ist der genannte kranzfeste Punkt) - und dem Abstützpunkt der zugehörigen Fahrer-Schulter an der Fahrzeugsitzlehne zumindest teilweise zu kompensieren, d.h. die beschriebene Abstandsänderung beim Verdrehen des Lenkrads fällt zumindest geringer aus oder wird vollständig unterbunden, wenn der Lenkradkranz hierfür in geeigneter Weise verformt wird, d.h. gesamtheitlich betrachtet eine andere Gestalt und somit eine andere Lage im Raum annimmt.

Ein formveränderlicher Lenkradkranz ist zwar bereits bekannt und in der eingangs genannten DE 199 19 278 A1 beschrieben, jedoch wird in dieser Schrift nicht auf die der vorliegenden Erfindung zugrunde liegende Problematik eingegangen. Bei diesem bekannten Stand der Technik wird im wesentlichen der Durchmesser und/oder die Dicke des Lenkradkranzes verändert, um ein dem jeweiligen Empfinden des Fahrers anpassbares Lenkrad zu schaffen. Dabei kann die Formänderung des Lenkradkranzes in Abhängigkeit von einem sog. Dynamikfaktor umgesetzt werden. Eine gezielte Formänderung in Abhängigkeit vom Lenkraddrehwinkel oder dgl. ist in dieser Schrift jedoch nicht erwähnt.

Dabei sei in diesem Zusammenhang darauf hingewiesen, dass ein Lenkrad mit einem im Durchmesser veränderbaren Lenkradkranz ebenfalls zur Lösung der Aufgabe der vorliegenden Erfindung geeignet ist, denn wenn während einer Drehbewegung des Lenkrades der Durchmesser des Lenkradkranzes verringert wird, so verringert sich hierdurch gleichzeitig der Abstand zwischen einem lenkrad-kranzfesten Punkt, an welchem sich die Hand des Fahrzeug-Fahrers befindet, und dem ortsfesten Abstützpunkt des Fahrer-Schultergelenkes an der Lehne des Fahrzeugsitzes. Ausgehend von der Neutralstellung kann sich somit in Abhängigkeit vom Lenkrad-Verdrehwinkel der Durchmesser des Lenkradkranzes selbsttätig verringern.

Neben der soeben genannten Ausführungsform zur Umsetzung der vorliegenden Erfindung gibt es noch eine Reihe weiterer Möglichkeiten, von denen einige im folgenden näher erläutert werden. Diese basieren dabei auf dem gemeinsamen Prinzip, dass der Lenkradkranz in Teilabschnitte unterteilt ist, die geeignet relativ zueinander bewegbar sind. Daneben sind jedoch weitere Prinzipien zur Umsetzung der erfindungsgemäßen Idee denkbar.

Nach einem Vorschlag ist zumindest ein in Lenkrad-Neutralstellung linksliegender und ein in Lenkrad-Neutralstellung rechtsliegender Lenkradkranz-Teilabschnitt vorgesehen, denen jeweils eine eigene Drehachse für die Lenkrad-Drehbewegung zugeordnet ist. Wenn diese teilabschnitt-individuelle Drehachse im wesentlichen durch den ortsfesten Abstützpunkt des linken bzw. rechten Fahrer-Schultergelenkes an der Lehne des Fahrzeugsitzes verläuft, so ist automatisch gewährleistet, dass sich der Abstand zwischen einem lenkrad-kranzfesten Punkt, an welchem sich die Hand des Fahrzeug-Fahrers befindet, und dem betroffenen (linken bzw. rechten) ortsfesten Abstützpunkt des Fahrer-Schultergelenkes an der Lehne des Fahrzeugsitzes auch bei einer Drehbewegung des Lenkrads praktisch nicht ändert. Dabei sollte zwischen den beiden Teilabschnitten des Lenkradkranzes ein geeignetes Getriebe oder dgl. vorgesehen sein, welches gewährleistet, dass bei einer Drehbewegung des Lenkrades die beiden Teilabschnitte im wesentlichen gleichermaßen (jeweils um ihre eigene Drehachse) verdreht werden.

Nach einem weiteren Vorschlag ist zumindest ein in Lenkrad-Neutralstellung linksliegender und ein in Lenkrad-Neutralstellung rechtsliegender Lenkradkranz-Teilabschnitt vorgesehen, wobei jeder Teilabschnitt um eine im wesentlichen in der Ebene des Lenkrades verlaufende Schwenkachse zumindest geringfügig zum Fahrer hin oder von diesem weg verschwenkbar ist. Im Verlauf einer Lenkrad-Drehbewegung kann somit der sich vom jeweiligen Fahrer-Schultergelenk wegbewegende kranzfeste Punkt, an welchem sich die zugehörige Hand des Fahrers befindet, geringfügig zum Oberkörper des Fahrers hingeschwenkt werden, wodurch eine Abstandsvergrößerung zumindest teilweise ausgeglichen werden kann.

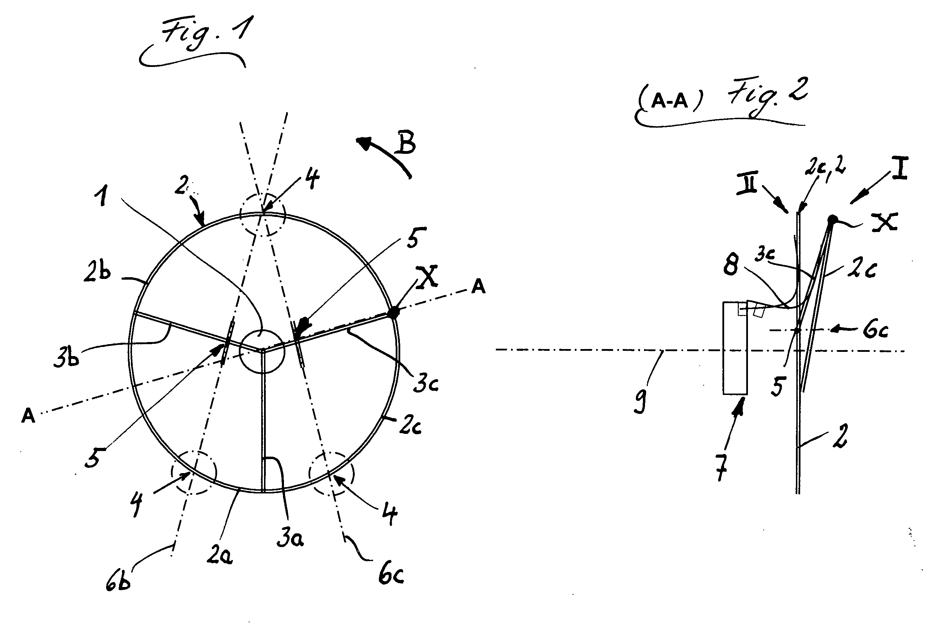

Zur näheren Erläuterung dieses Vorschlags wird auf die beigefügten Prinzipskizzen verwiesen, in denen ein bevorzugtes Ausführungsbeispiel stark abstrahiert dargestellt ist. Dabei zeigt **Figur 1** die Aufsicht auf ein erfindungsgemäßes Lenkrad in seiner sog. Neutralstellung, während in **Figur 2** der Schnitt A-A aus Figur 1 dargestellt ist, und zwar nachdem das Lenkrad ausgehend von der in Figur 1 dargestellten Position / Neutralstellung um einen Winkel von 60°gemäß Pfeil B verdreht worden ist. Dabei ist in **Figur 2** das Lenkrad gleichzeitig in zwei Varianten I, II dargestellt. In der Variante I ist das genannte Verschwenken eines Lenkradkranz-Teilabschnittes erfolgt, während bei der Variante II dieser Lenkradkranz-Teilabschnitt nicht verschwenkt wurde, so dass Variante II hinsichtlich der Lage bzw. Form des Lenkradkranzes im wesentlichen den üblichen Stand der Technik wiedergibt.

Zunächst nur auf **Figur 1** Bezug nehmend besteht das dargestellte Lenkrad - wie noch üblich - aus einem sog. Lenkradmittelteil 1 sowie einem in seiner Gesamtheit mit der Bezugsziffer 2 versehenen Lenkradkranz, der mit dem Lenkradmittelteil 1 über Speichen 3a, 3b, 3c verbunden ist. Das Lenkradmittelteil 1 ist drehfest mit einer nicht dargestellten Lenkspindel verbunden, die (in Figur 1) senkrecht zur Zeichenebene (nach hinten) verläuft.

Abweichend vom üblichen Stand der Technik ist der Lenkradkranz 2 nicht einstückig ausgebildet, sondern besteht hier aus drei aneinander gereihten Lenkradkranz-Teilabschnitten 2a, 2b, 2c, von denen sich (hier) eines über ein Segment von ca. 30° und zwei jeweils über ein Segment von ca. 165° erstrecken. Dabei ist der kleinere, in der Lenkrad-Neutralstellung mittigsymmetrisch unten liegende Lenkradkranz-Teilabschnitt 2a über die Speiche 3a starr mit dem Lenkradmittelteil 2 verbunden.

An den beiden Enden dieses sog. starren Lenkradkranz-Teilabschnittes 2a ist jeweils ein Gelenk 4 vorgesehen, über das bzw. die eine Verbindung mit dem in der Lenkrad-Neutralposition linksliegenden zweiten Lenkradkranz-Teilabschnitt 2b bzw. mit dem in der Lenkrad-Neutralposition rechtsliegenden dritten Lenkradkranz-Teilabschnitt 2c hergestellt ist. Ein drittes Gelenk 4 befindet sich in dieser Neutralposition obenliegend zwischen dem zweiten und dritten Lenkradkranz-Teilabschnitt 2b bzw. 2c, d.h. über dieses (obere) dritte Gelenk 4 sind der zweite und dritte Lenkradkranz-Teilabschnitt 2b bzw. 2c jeweils mit ihren dem ersten starren Lenkradkranz-Teilabschnitt 2a abgewandten Enden gelenkig miteinander verbunden.

Die beiden in Lenkrad-Neutralstellung seitlichen Lenkradkranz-Teilabschnitte 2b und 2c sind (ebenso wie der starre Lenkradkranz-Teilabschnitt 2a) jeweils über eine Speiche 3b bzw. 3c mit dem Lenkradmittelteil 1 verbunden, wobei in jeder Speiche 3b, 3c ein Scharnier 5 vorgesehen ist. Jedes Scharnier 5 ist dabei so ausgebildet, dass es zusammen mit den geeignet gestalteten Gelenken 4 jeweils eine Schwenkachse 6b bzw. 6c bildet. Um die in der Neutralstellung linke Schwenkachse 6b, die durch das obere Gelenk 4 zwischen den Lenkradkranz-Teilabschnitten 2b und 2c sowie durch das linke untere Gelenk 4 zwischen den Lenkradkranz-Teilabschnitten 2b und 2a sowie durch das Scharnier 5 in der linken Speiche 3b gebildet wird, ist der linke Lenkradkranz-Teilabschnitt 2b gegenüber der Zeichenebene verschwenkbar. Um die in der Lenkrad-Neutralstellung rechte Schwenkachse 6c, die durch das obere Gelenk 4 zwischen den Lenkradkranz-Teilabschnitten 2b und 2c sowie durch das rechte untere Gelenk 4 zwischen den Lenkradkranz-Teilabschnitten 2c und 2a sowie durch das Scharnier 5 in der rechten Speiche 3c gebildet wird, ist der rechte Lenkradkranz-Teilabschnitt 2c gegenüber der Zeichenebene verschwenkbar.

Wenn nun das Lenkrad aus seiner Neutralstellung bspw. gemäß Pfeil B nach links verdreht wird (vgl. **Figur 1**), so wird gleichzeitig der rechte Lenkradkranz-Teilabschnitt 2c aus der Zeichenebene heraus zum Oberkörper des davor sitzenden Fahrers hingeschwenkt, wodurch gewährleistet ist, dass sich im Verlauf dieser Lenkrad-Drehbewegung aufgrund der durch dieses Verschwenken des Lenkradkranz-Teilabschnittes 2c einstellenden Formveränderung des Lenkrades der Abstand zwischen einem kranzfesten Punkt X, an welchem sich die Hand des Fahrzeug-Fahrers befindet (und der hier lediglich zufällig am Schnittpunkt der Speiche 3c mit dem Lenkradkranz-Teilabschnitt 2c liegt), und dem ortsfesten Abstützpunkt des Fahrer-Schultergelenkes an der Lehne des Fahrzeugsitzes um einen geringeren Betrag ändert, als dies bei einem formfesten Lenkradkranz während der gleichen Lenkbewegung der Fall ist.

Dies geht auch aus der im weiteren erläuterten **Figur 2** hervor, in der schematisch ein Mechanismus dargestellt ist, der die soeben beschriebene Verschwenkbewegung eines Lenkradkranz-Teilabschnittes 2c bzw. 2b im Verlauf einer Lenkrad-Drehbewegung initiiert. Bevorzugt soll diese Verschwenkbewegung in Abhängigkeit von einer Lenkrad-Drehbewegung selbsttätig ohne Zutun des Fahrers erfolgen. So kann in einer bevorzugten Ausführungsform der Erfindung die Verschwenkbewegung des verschwenkbaren Lenkradkranz-Teilabschnittes 2b bzw. 2c im Verlauf einer Lenkrad-Drehbewegung durch eine Kulissenbahn 7 gesteuert werden, wozu an jedem verschwenkbaren Lenkradkranz-Teilabschnitt 2b bzw. 2c jeweils ein in einer individuellen Kulissenbahn 7 geführter Hebel 8 befestigt ist.

In der nun erläuterten **Figur 2** ist der Schnitt A-A aus Figur 1 dargestellt, und zwar nachdem das Lenkrad ausgehend von der in Figur 1 dargestellten Position / Neutralstellung um einen Winkel von 60°gemäß Pfeil B verdreht worden ist. Dabei ist in **Figur 2** das Lenkrad gleichzeitig in zwei Varianten I, II dargestellt. In der Variante I ist das genannte Verschwenken eines Lenkradkranz-Teilabschnittes erfolgt, während bei der Variante II dieser Lenkradkranz-Teilabschnitt nicht verschwenkt wurde, so dass Variante II hinsichtlich der Lage bzw. Form des Lenkradkranzes im wesentlichen den üblichen Stand der Technik wiedergibt.

Wie ersichtlich ist in der Darstellung / Variante I der verschwenkbare und in dieser Lenkradstellung dann obere Lenkradkranz-Teilabschnitt 2c zum (in Figur 2) rechtsseitig des Lenkrads sitzenden Fahrer hingeschwenkt. Dem Fahrer kommt beim Verdrehen des Lenkrads gemäß Pfeil B (vgl. Fig.1) um die Lenkrad-Drehachse 9 der Lenkradkranz-Teilabschnitt 2c (und somit der kranzfeste Punkt X) geringfügig entgegen, so dass sich der Abstand zwischen diesem Punkt X, an dem der Fahrer mit seiner rechten Hand den Lenkradkranz umfasst, und dem Abstützpunkt der zugehörigen rechten Schulter des Fahrers an der Lehne des Fahrzeugsitzes nicht nennenswert vergrößert. Der Fahrer muss somit im Verlauf dieser Lenkrad-Drehbewegung seine rechte Schulter nicht von der Sitz-Lehne wegbewegen.

Demgegenüber ist unter Variante II im wesentlichen der übliche Stand der Technik dargestellt, d.h. ein Lenkrad, das im Verlauf einer Drehbewegung um ide Lenkrad-Drehachse 9 seine Form nicht ändert, d.h. stets eine Ebene beschreibt, ohne dass ein Lenkradkranz-Teilabschnitt verschwenkt bzw. zum Fahrer hin bewegt wird. Eine Variante der Erfindung ist diese Variante II insofern, als nach einer vorteilhaften Weiterbildung diese mögliche Verschwenkbewegung eines Lenkradkranz-Teilabschnittes 2b bzw. 2c im Verlaufe einer Lenkrad-Drehbewegung auch unterbunden werden kann. Allgemein ausgedrückt können die im Verlauf einer Lenkrad-Drehbewegung relativ zueinander bewegbaren Lenkradkranz-Teilabschnitte 2b, 2c gegeneinander festsetzbar sein und somit die genannte Relativbewegung oder Formänderung des Lenkradkranzes 2 nicht erfolgen, falls der Fahrer dies wünscht oder falls dies aufgrund irgendwelcher Umstände günstiger ist.

Zurückkommend auf den Mechanismus zur Initiierung der Verschwenkbewegung des verschwenkbaren Lenkradkranz-Teilabschnittes 2b bzw. 2c erkennt man in **Figur 2** einen geeignet an der Rückseite der Speiche 3b bzw. 3c befestigten Hebel 8, der mit seinem freien Ende in einer Kulissenbahn 7, die vom Fahrer aus betrachtet ebenfalls hinter dem Lenkrad angeordnet ist, geführt ist. Diese Kulissenbahn 7 oder Führungskurve ist dabei derart geformt, dass bei einer Verdrehbewegung des Lenkrads in bzw. gegen Pfeil B der jeweils betroffene Lenkradkranz-Teilabschnitt 2b und/oder 2c wie dargestellt und beschrieben um die jeweilige Schwenkachse 6b bzw. 6c verschwenkt wird. Dabei sind für den linken und den rechten Lenkradkranz-Teilabschnitt 2b und 2c jeweils separate Kulissenbahnen 7 vorgesehen, die dann bevorzugt hintereinander angeordnet sind.

Abweichend von dieser beschriebenen mechanischen Zwangsführung, die - wie bereits erwähnt wurde - auch abschaltbar bzw. abkoppelbar sein kann, ist auch eine andersartig, bspw. motorisch initiierte Verschwenkbewegung möglich. Ein geeigneter bspw. in einer Nut geführter Motor, insbesondere Elektromotor kann den verschwenkbaren oder allgemein beweglichen Lenkradkranz-Teilabschnitt dann den jeweiligen Randbedingungen entsprechend bewegen, bzw. noch allgemeiner eine entsprechende Formänderung des Lenkradkranzes veranlassen, wobei diese Formänderung oder dgl. dann bevorzugt elektronisch gesteuert umgesetzt wird.

Im Sinne einer vorteilhaften Weiterbildung können sich in der Neutralstellung des Lenkrads die verschwenkbaren Lenkradkranz-Teilabschnitte gegenüber der Ebene des Lenkrads betrachtet in einer vom Fahrer geringfügig weggeschwenkten Position befinden. Der sich dann einstellende sogenannte "Flügelschlag" beim Verdrehen eines erfindungsgemäßen Lenkrades ist dann subjektiv für den Fahrer geringer, als wenn das Lenkrad in seiner Neutralstellung eine Ebene beschreibt. Tatsächlich können jedoch die einzelnen verschwenkbaren Lenkradkranz-Teilabschnitte bspw. im Laufe einer Lenkrad-Drehbewegung von 180° stets absolut um bspw. 50 mm nach vorne verlagert werden, wobei zunächst aus einer bspw. um 25 mm zurückverlagerten Position in der Lenkrad-Neutralstellung eine Vorverlagerung des entsprechenden Lenkradkranz-Teilabschnittes soweit erfolgt, dass sich ein ebenes Lenkrad ergibt, und dass erst bei einer weiteren Lenkrad-Drehbewegung eine weitere Vor-Verlagerung um bspw. 25 mm erfolgt.

Die vorgeschlagene Lenkrad-Gestaltung mit dem sog. starren, d.h. fest mit dem Lenkradmittelteil 1 verbundenen Lenkradkranz-Teilabschnitt 2a verleiht dem Lenkrad die erforderliche Stabilität. Geeignet lang können hierfür auch die Scharniere 5 in den Speichen 3b, 3c ausgebildet sein. Im Crashfall muss der starre Lenkradkranz-Teilabschnitt 2a ca. 60% bis 80% der Stützkraft übernehmen, wobei es die Scharniere 5 ermöglichen, dass über den Lenkradkranz 2 Biegemomente durch die oberen Bereiche übernommen werden und so die Last verteilt wird. Dabei können die Hebel 8 hinter den Speichen 3b, 3c als Crashelemente ausgelegt sein, um einen gezielten Energieabbau zu erreichen, jedoch kann dies sowie eine Vielzahl weiterer Details insbesondere konstruktiver Art durchaus abweichend vom gezeigten Ausführungsbeispiel gestaltet sein, ohne den Inhalt der Patentansprüche zu verlassen. So ist eine Ausführung möglich, bei der die Verbindung zwischen den verschwenkbaren Lenkradkranz-Teilabschnitten 2b, 2c und der Kulissenbahn 7 unterbrochen und dafür eine starre Verbindung mit dem Lenkradmittelteil 1 bzw. letztlich mit der Lenksäule hergestellt werden kann. Dadurch wird die Möglichkeit geschaffen, den angebotenen Schwenkmechanismus außer Kraft zu setzen.

## Patentansprüche

1. Lenkrad für ein Fahrzeug, insbesondere ein Kraftfahrzeug, mit einem in seiner Form veränderbaren Lenkradkranz (2),
**dadurch gekennzeichnet, dass** der Lenkradkranz (2) derart formveränderlich ist, dass sich im Verlauf einer Lenkrad-Drehbewegung aufgrund dieser Formveränderung der Abstand zwischen einem kranzfesten Punkt (X), an welchem sich die Hand des Fahrzeug-Fahrers befindet, und dem ortsfesten Abstützpunkt des Fahrer-Schultergelenkes an der Lehne des Fahrzeugsitzes um einen geringeren Betrag ändert, als dies bei einem formfesten Lenkradkranz während der gleichen Lenkbewegung der Fall ist.

2. Lenkrad nach Anspruch 1,
**dadurch gekennzeichnet, dass** der Lenkradkranz (2) in Teilabschnitte (2a, 2b, 2c) unterteilt ist, die relativ zueinander bewegbar sind.

3. Lenkrad nach Anspruch 2,
**dadurch gekennzeichnet, dass** zumindest ein in Lenkrad-Neutralstellung linksliegender und ein in Lenkrad-Neutralstellung rechtsliegender Lenkradkranz-Teilabschnitt vorgesehen ist, denen jeweils eine eigene Drehachse für die Lenkrad-Drehbewegung zugeordnet ist, die im wesentlichen durch den ortsfesten Abstützpunkt des linken bzw. rechten Fahrer-Schultergelenkes an der Lehne des Fahrzeugsitzes verläuft.

4. Lenkrad nach Anspruch 2,
**dadurch gekennzeichnet, dass** zumindest ein in Lenkrad-Neutralstellung linksliegender und ein in Lenkrad-Neutralstellung rechtsliegender Lenkradkranz-Teilabschnitt (2b bzw. 2c) vorgesehen ist, wobei jeder Teilabschnitt um eine im wesentlichen in der Ebene des Lenkrades verlaufende Schwenkachse (6b bzw. 6c) zumindest geringfügig zum Fahrer hin oder von diesem weg verschwenkbar ist.

5. Lenkrad nach Anspruch 4,
**dadurch gekennzeichnet, dass** zumindest ein weiterer Lenkradkranz-Teilabschnitt (2a) vorgesehen ist, der im wesentlichen starr mit einem an einer Lenkspindel drehfest befestigten Lenkradmittelteil (1) verbunden ist.

6. Lenkrad nach Anspruch 5,
**dadurch gekennzeichnet, dass** die verschwenkbaren Lenkradkranz-Teilabschnitte (2b, 2c) über ein Gelenk (4) mit dem starren Lenkradkranz-Teilabschnitt (2a) verbunden sind.

7. Lenkrad nach einem der vorangegangenen Ansprüche,
**dadurch gekennzeichnet; dass** sich in Lenkrad-Neutralstellung betrachtet ein einziger starr mit dem Lenkradmittelteil (1) verbundener Lenkradkranz-Teilabschnitt (2a) im wesentlichen symmetrisch mittig im unteren Bereich des Lenkradkranzes (2) befindet, an dem die beiden verschwenkbaren dann seitlichen Lenkradkranz-Teilabschnitte (2b, 2c) jeweils über ein Gelenk (4) befestigt sind, die mit ihren anderen Enden im wesentlichen mittig im oberen Bereich des Lenkradkranzes (2) über ein Gelenk (4) miteinander verbunden sind.

8. Lenkrad nach einem der vorangegangenen Ansprüche,
**dadurch gekennzeichnet, dass** die verschwenkbaren Lenkradkranz-Teilabschnitte (2b, 2c) jeweils über eine mit einem Scharnier (5) versehene Speiche (3b, 3c) mit dem Lenkradmittelteil (1) verbunden sind.

9. Lenkrad nach einem der vorangegangenen Ansprüche,
**dadurch gekennzeichnet, dass** die Verschwenkbewegung des verschwenkbaren Lenkradkranz-Teilabschnittes (2b, bzw. 2c) im Verlauf einer Lenkrad-Drehbewegung durch eine Kulissenbahn (7) gesteuert wird.

10. Lenkrad nach Anspruch 9,
**dadurch gekennzeichnet, dass** am verschwenkbaren Lenkradkranz-Teilabschnitt (2b, 2c) ein in der Kulissenbahn (7) geführter Hebel (8) befestigt ist.

11. Lenkrad nach einem der vorangegangenen Ansprüche,
**dadurch gekennzeichnet, dass** die Verschwenkbewegung des verschwenkbaren Lenkradkranz-Teilabschnittes im Verlauf einer Lenkrad-Drehbewegung motorisch, insbesondere elektromotorisch gesteuert wird.

12. Lenkrad nach einem der vorangegangenen Ansprüche,
**dadurch gekennzeichnet, dass** sich in der Neutralstellung des Lenkrads die verschwenkbaren Lenkradkranz-Teilabschnitte (2b, 2c) gegenüber der Ebene des Lenkrads betrachtet in einer vom Fahrer weggeschwenkten Position befinden.

13. Lenkrad nach einem der vorangegangenen Ansprüche,
**dadurch gekennzeichnet, dass** die im Verlauf einer Lenkrad-Drehbewegung relativ zueinander bewegbaren Lenkradkranz-Teilabschnitte (2a, 2b, 2c) gegeneinander festsetzbar sind und die genannte Relativbewegung nicht erfolgt.
